# EUROPEAN PATENT SPECIFICATION

(11) **EP 4 293 506 B1**
(45) Date of publication and mention of the grant of the patent: **02.04.2025**
(21) Application number: 23178518.9
(22) Date of filing: 09.06.2023
(51) Int. Cl.: G06F 9/4401

(54) **ELECTRONIC DEVICE, METHOD, AND RECORDING MEDIUM FOR BOOT PROCESSING**
ELEKTRONISCHE VORRICHTUNG, VERFAHREN UND AUFZEICHNUNGSMEDIUM ZUR BOOT-VERARBEITUNG
DISPOSITIF ÉLECTRONIQUE, PROCÉDÉ ET SUPPORT D'ENREGISTREMENT POUR LE TRAITEMENT DE L'AMORÇAGE

(30) Priority: 17.06.2022 JP 2022097702
(43) Date of publication of application: 20.12.2023
(73) Proprietor: Casio Computer Co., Ltd., Tokyo 151-8543 (JP)
(72) Inventor: OKANO, Shingo, Tokyo, 205-8555 (JP); KAJIKAWA, Tomoya, Tokyo, 205-8555 (JP); MORIYAMA, Osamu, Tokyo, 205-8555 (JP); MORITANI, Shinichi, Tokyo, 205-8555 (JP); ICHIMURA, Yutaro, Tokyo, 205-8555 (JP); MIYATA, Akira, Tokyo, 205-8555 (JP); TERAO, Ken, Tokyo, 205-8555 (JP)
(74) Representative: Plougmann Vingtoft a/s

(56) References cited:
- US-B2- 10 877 845

## Description

### Background of the invention

The disclosure of this specification relates to an electronic device, a method, and a recording medium.

### Related Art

There has been known an electronic musical instrument serving as an example of an electronic device (for example, JP 2004-264501 A). In the electronic musical instrument of this kind, if the power is turned on, boot processing is executed. The electronic musical instrument enters a playable state only after the boot processing is completed. In this manner, it takes time for the electronic musical instrument to enter the playable state as compared with an acoustic instrument.

Depending on the state of a memory region included in the electronic musical instrument, a time (boot time) taken to complete boot processing since the power is turned on sometimes becomes longer. The longer boot time can give a user stress.

The present invention has been devised in view of the above-described circumstance, and aims to provide an electronic device, a method, and a program that can reduce stress on the user who waits for the completion of boot processing.

US 10 877 845 B2 (DELL PRODUCTS LP [US]) 29 December 2020 (2020-12-29) discloses storing Power-On Self Test (POST) code, diagnostic code, and remediation code whereby the POST code determines whether an error occurred, the diagnostic code determines whether the error is associated with a configuration setting of the computing device being in a first state. If the error is associated with the configuration setting being in the first state, the remediation code changes the first configuration setting from the first state to a second state, and reboots the computing device.

### Summary of the invention

An electronic device according to an embodiment of the present invention includes: a storage unit including a data region that stores data; an output unit; and at least one processor. The at least one processor executes: first boot processing in which a boot time is constant irrespective of a usage state of data in the data region, first output processing of outputting information of a first pattern to the output unit during execution of the first boot processing, second boot processing in which a boot time varies depending on a usage state of the data, and second output processing of outputting information of a second pattern to the output unit until the second boot processing is completed.

### Brief description of the several views of the drawing

FIG. 1 is a diagram illustrating an external view of an electronic musical instrument according to an embodiment of the present invention;
FIG. 2 is a block diagram illustrating a configuration of an electronic musical instrument according to an embodiment of the present invention;
FIG. 3 is a sequence diagram of processing to be executed in an embodiment of the present invention;
FIG. 4 is a subroutine illustrating first boot processing to be executed in an embodiment of the present invention;
FIG. 5 is a diagram illustrating information of a first pattern that is to be output during first boot processing;
FIG. 6A is a diagram illustrating a state of a flash Read Only Memory (ROM) of an electronic musical instrument that is obtained before shipment;
FIG. 6B is a diagram illustrating a state of a flash ROM of an electronic musical instrument used by a user; and
FIG. 7 is a diagram illustrating information of a second pattern that is to be output during second boot processing.

### Detailed description of the invention

An electronic device according to an embodiment of the present invention, and a method and a program that are to be executed by an electronic device serving as an example of a computer will be described in detail with reference to the drawings.

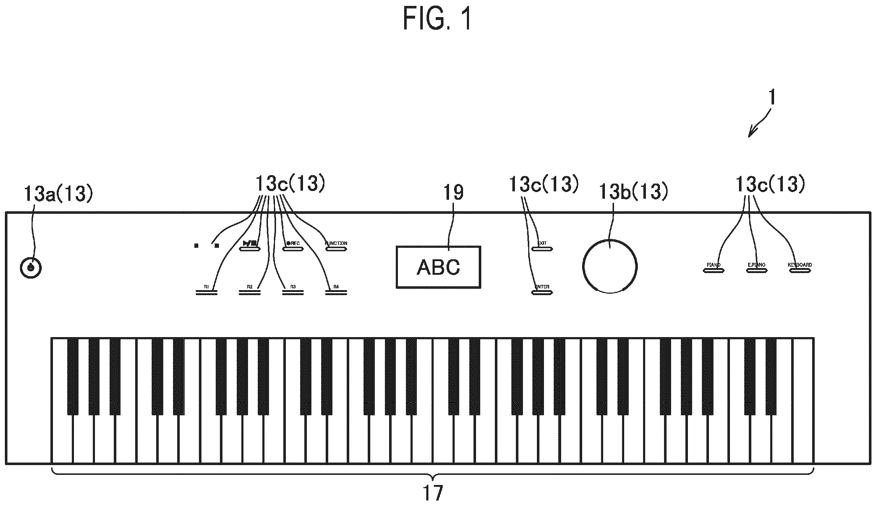

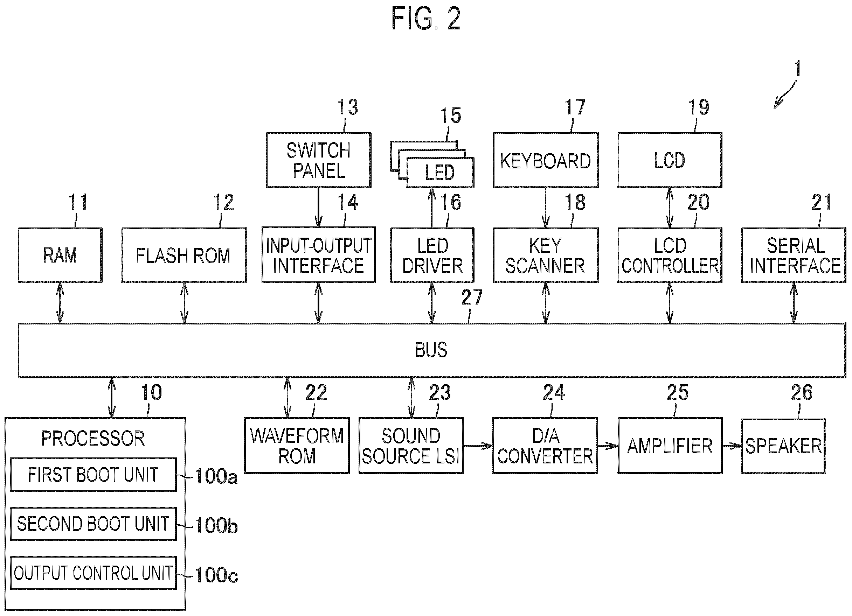

FIG. 1 is a diagram illustrating an external view of an electronic musical instrument 1 serving as an example of an electronic device according to an embodiment of the present invention. FIG. 2 is a block diagram illustrating a configuration of the electronic musical instrument **1.** The electronic musical instrument 1 is an electronic keyboard, for example. The electronic musical instrument 1 may be an electronic clavier other than an electronic keyboard, or may be an electronic musical instrument of another form such as an electronic percussion instrument, an electronic wind instrument, or an electronic stringed instrument.

The electronic musical instrument 1 includes, as hardware components, a processor 10, a Random Access Memory (RAM) 11, a flash ROM 12, a switch panel 13, an input-output interface 14, a Light Emitting Diode (LED) 15, an LED driver 16, a keyboard 17, a key scanner 18, a Liquid Crystal Display (LCD) 19, an LCD controller 20, a serial interface 21, a waveform ROM 22, a sound source Large Scale Integration (LSI) 23, a D/A converter 24, an amplifier 25, and a speaker 26. The components of the electronic musical instrument 1 are connected via a bus 27.

The processor 10 overall controls the electronic musical instrument 1 by reading out programs and data stored in the flash ROM 12, and using the RAM 11 as a work area.

The processor 10 is a single-processor or a multiprocessor, for example, and includes at least one processor. In a case where the processor 10 is configured to include a plurality of processors, the processor 10 may be packaged as a single device, and may include a plurality of devices physically separated in the electronic musical instrument 1. The processor 10 may be called, for example, a control unit, a Central Processing Unit (CPU), a Micro Processor Unit (MPU), or a Micro Controller Unit (MCU).

The RAM 11 temporarily holds data and programs. Programs and data read out from the flash ROM 12, waveform data read out from the waveform ROM 22, and other data necessary for communication are held in the RAM 11.

The flash ROM 12 is a nonvolatile semiconductor memory such as a flash memory, an Erasable Programmable ROM (EPROM), or an Electrically Erasable Programmable ROM (EEPROM).

The switch panel 13 is a flat operation panel provided on a casing of the electronic musical instrument 1. If a user operates the switch panel 13, a signal indicating the operation is output to the processor 10 via the input-output interface 14.

The switch panel 13 includes a built-in capacitive touch panel or optical touch panel, for example, and includes operation elements 13a and 13b, and a plurality of operation elements 13c.

The operation element 13a is a switch for turning on or off the power of the electronic musical instrument 1, for example. By touching the operation element 13a, the user can turn on or off the power of the electronic musical instrument 1.

The operation element 13b is an operation element for adjusting a parameter value such as sound volume, or selecting an item, for example.

The user can adjust a parameter value by sliding a finger on the operation element 13b in such a manner as to rotate the operation element 13b, for example. By touching the operation element 13c (the operation element 13c assigned a parameter value switch function), for example, the user can switch the type of a parameter value adjustable using the operation element 13b.

By touching an upper portion (an arc on the upper side of the circumference), a lower portion (an arc on the lower side of the circumference), a right portion (an arc on the right side of the circumference), or a left portion (an arc on the left side of the circumference) of the circumference of the operation element 13b, for example, the user can select an item from a menu screen displayed on the LCD 19. By touching the operation element 13c (the operation element 13c assigned a menu screen switch function), for example, the user can switch a menu screen to be displayed on the LCD 19.

The plurality of operation elements 13c is an operation element for designating a predetermined setting value in the electronic musical instrument 1, for example. By touching the operation element 13c, for example, the user can designate a predetermined setting value in the electronic musical instrument 1. As an example, by touching the operation element 13c, the user can designate tone color (guitar, bass, piano, etc.).

Note that the switch panel 13 is not limited to a flat operation panel, and is not limited to a touch panel. The switch panel 13 may be configured to include an operation element such as a mechanical switch, a capacitive non-contact switch, a membrane switch, a button, a knob, a rotary encoder, or a wheel.

The LED 15 is installed on the back side of a top board on which the switch panel 13 is formed, at each point at which each operation element of the operation elements 13a, 13b and 13c is positioned. Each of the LEDs 15 is individually driven by the LED driver 16. By controlling the LED driver 16, the processor 10 lights up, blinks, or turns off the LED 15 in accordance with a touch operation performed by the user, for example.

In this manner, the LED 15 operates as a light emission unit that causes an operation element to emit light (perform lighted display). More specifically, a plurality of LEDs 15 is included. Each of the plurality of LEDs 15 operates as a light emission unit that causes a corresponding operation element to emit light (perform lighted display).

The keyboard 17 is a keyboard including a plurality of white keys and black keys as a plurality of play operation elements. The keys are respectively associated with different pitches.

The key scanner 18 monitors key press and key separation with respect to the keyboard 17. If the key scanner 18 detects a key press operation performed by the user, for example, the key scanner 18 outputs key press event information to the processor 10. The key press event information includes information (key number) regarding a pitch of a key related to the key press operation. The key number is sometimes called a key number, a MIDI key, or a note number.

In the present embodiment, means for measuring a key press speed of a key (velocity value) is separately provided, and a velocity value measured by this means is also included in the key press event information. As an exemplification, a plurality of contact switches is provided for each key. Based on a difference in time during which electricity is conducted to each contact switch when a key is pressed, a velocity value is measured. The velocity value can also be said to be value indicating the strength of a key press operation, and can also be said to be a value indicating dynamics (sound volume) of a musical tone.

The LCD 19 is driven by the LCD controller 20. If the LCD controller 20 drives the LCD 19 in accordance with a control signal issued by the processor 10, a screen corresponding to the control signal is displayed on the LCD 19. The LCD 19 may be replaced with a display such as an organic Electro Luminescence (EL). The LCD 19 may be one of operation elements that incorporates a touch panel.

In this manner, the LCD 19 operates as a display unit that displays an image.

The serial interface 21 is an interface that inputs or outputs MIDI data (MIDI message) to or from an external Musical Instrument Digital Interface (MIDI) device in a serial format under the control of the processor 10.

The waveform ROM 22 stores a set of waveform data for each tone color (guitar, bass, piano, etc.). A set of waveform data of each tone color includes waveform data of (a plurality of) partial key numbers (for the sake of convenience described as "waveform data set".) among all key numbers corresponding to the keys of the keyboard 17. In the present embodiment, by changing a readout speed (i.e., pitch) of waveform data, a musical tone of a key number not included in the waveform data set can be produced. That is, using a waveform data set including only partial key numbers, musical tones of all key numbers corresponding to the keys of the keyboard 17 can be produced.

The waveform data stored in the waveform ROM 22 (for example, waveform data of currently-set tone color) is loaded onto the RAM 11 at the time of boot processing of the electronic musical instrument 1 in such a manner that the musical tone is promptly produced in accordance with a key press operation. The processor 10 instructs the sound source LSI 23 to read out corresponding waveform data from among a plurality of pieces of waveform data loaded onto the RAM 11. The waveform data to be read out is determined in accordance with tone color and key press event information selected based on an operation performed by the user, for example.

Under an instruction issued by the processor 10, the sound source LSI 23 generates a musical tone based on waveform data read out from the RAM 11. The sound source LSI 23 includes 128 generator sections, for example, and can simultaneously produce 128 musical tones at most. Note that, in the present embodiment, the processor 10 and the sound source LSI 23 are formed as separated devices, but in another embodiment, the processor 10 and the sound source LSI 23 may be formed as one processor.

Digital musical tone data generated by the sound source LSI 23 is converted by the D/A converter 24 into an analog signal, and then amplified by the amplifier 25, and output to the speaker 26.

The processor 10 includes, as functional blocks, a first boot unit 100a that executes first boot processing, a second boot unit 100b that executes second boot processing, and an output control unit 100c that causes an output unit to output, during boot processing, information regarding a state of the boot processing, in a format perceptible by a person (for example, a user of the electronic musical instrument 1) (for example, at least either one of image or light being visual information, and sound being audio information). In addition, the output control unit 100c executes first output processing of outputting information of the first pattern to the output unit during the execution of the first boot processing, and second output processing of outputting information of the second pattern to the output unit until the second boot processing is completed. By operations of these functional blocks, during the execution of boot processing including the first boot processing and the second boot processing, output (production) that uses images, light, or sound is performed. By such audio-visual output (production) being performed, it is possible to make a user less likely to be conscious of a wait time during boot processing. Thus, it is possible to reduce stress on the user who waits for the electronic musical instrument 1 to enter a playable state.

In the present embodiment, each functional block of the processor 10 is implemented by a control program 120 (to be described later) being software. Note that a part or all of functional blocks of the processor 10 may be implemented by hardware such as a dedicated logic circuit.

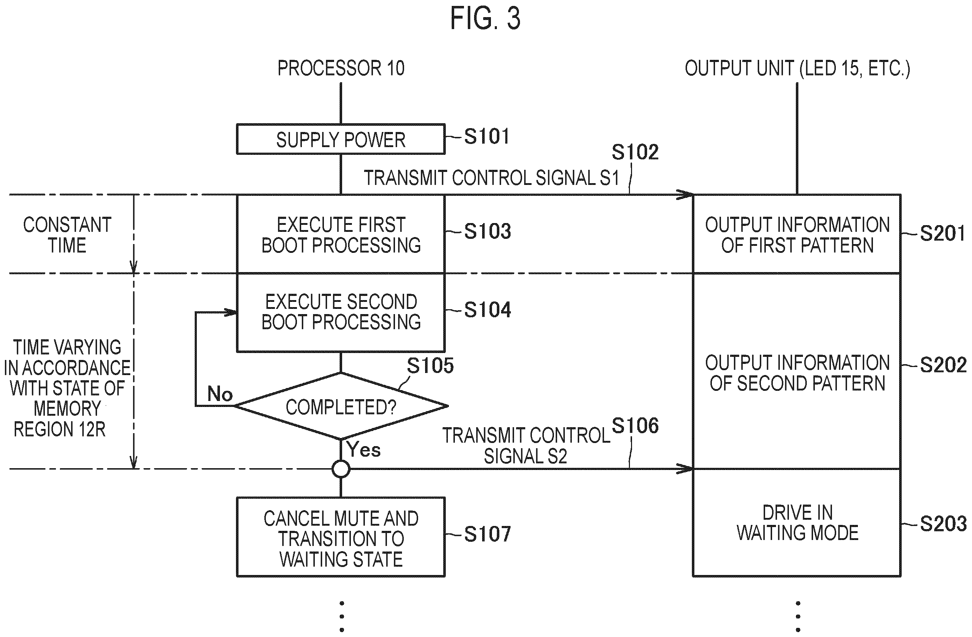

FIG. 3 illustrates a sequence diagram of processing to be executed by the processor 10 and the output unit. In the present embodiment, the output unit that outputs audio-visual information during boot time includes the LED 15, the LED driver 16, the LCD 19, and the LCD controller 20.

Generally, if the power of the electronic musical instrument 1 is turned on, the processor 10 executes the first boot processing being predetermined processing. During the execution of the first boot processing taking a constant time, the output unit outputs information of the first pattern that indicates that the first boot processing is ongoing. At the time point at which the constant time elapses since the power is turned on, the first boot processing is completed, and the output of information of the first pattern ends. Subsequently, the processor 10 executes the second boot processing taking a variable-length time. Further, the output unit outputs information of the second pattern subsequently to the end of information of the first pattern. The information of the second pattern is repeatedly output to the output unit until the second boot processing is completed. By presenting the information of the first and second patterns to the user, it is possible to make a user less likely to be conscious of a wait time (for example, about several tens of seconds at most) during boot processing.

As illustrated in FIG. 3, if the power of the electronic musical instrument 1 is turned on and power is supplied (Step S101), the processor 10 transmits, to the output unit, a control signal S1 for issuing an output instruction of information of the first pattern (Step S102), and starts the execution of first boot processing (Step S103).

The first boot processing is predetermined processing to be executed even when the electronic musical instrument 1 is in a factory default state, and a boot time taken from the start to completion is constant irrespective of a usage state of data in a data region of the flash ROM 12. The first boot processing includes processing for bringing the electronic musical instrument 1 into a state (playable state) of being able to output sound corresponding to a play operation performed by the user on the electronic musical instrument 1, for example. As specific exemplification, the first boot processing includes the following first processing to fourth processing.

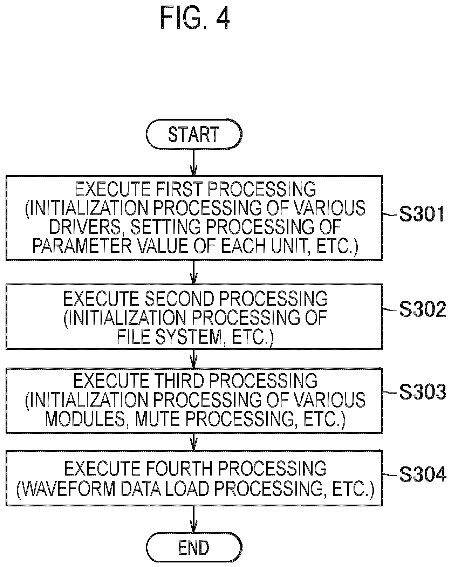

FIG. 4 is a subroutine illustrating first boot processing. As illustrated in FIG. 4, the processor 10 executes the first processing (Step S301). The first processing includes initialization processing of various drivers for causing each unit (for example, the switch panel 13, the keyboard 17, the LCD 19, the serial interface 21, the sound source LSI 23, etc.) to normally operate, setting processing (update processing, etc.) of a parameter value of each unit, and the like.

If the first processing is completed, the processor 10 executes second processing (Step S302). The second processing includes initialization processing of a file system that processes preset data (for example, data such as demonstration sound source and metronome sound source) obtained before shipment.

If the second processing is completed, the processor 10 executes third processing (Step S303). The third processing includes initialization processing of modules (for example, effect, mixer, a Digital Signal Processor (DSP), and the like) for implementing various functions, mute processing of muting an output line (the speaker 26, headphones, line out, etc.), and the like.

If the third processing is completed, the processor 10 executes fourth processing (Step S304). The fourth processing includes waveform data load processing of loading specific waveform data (for example, waveform data with high use frequency, waveform data of tone color set at the time of boot) from the waveform ROM 22 onto the RAM 11, and the like. By preliminarily loading waveform data onto the RAM 11 with a processing speed higher than that of the waveform ROM 22, it is possible to promptly produce musical tone in accordance with a key press operation.

By the above-described first processing to fourth processing being completed, the electronic musical instrument 1 transitions from a power-off state to a playable state.

If the LED driver 16 and the LCD controller 20 included in the output unit receive the control signal S1 (Step S102), the LED driver 16 and the LCD controller 20 drive the LED 15 and the LCD 19 in the first pattern (Step S201).

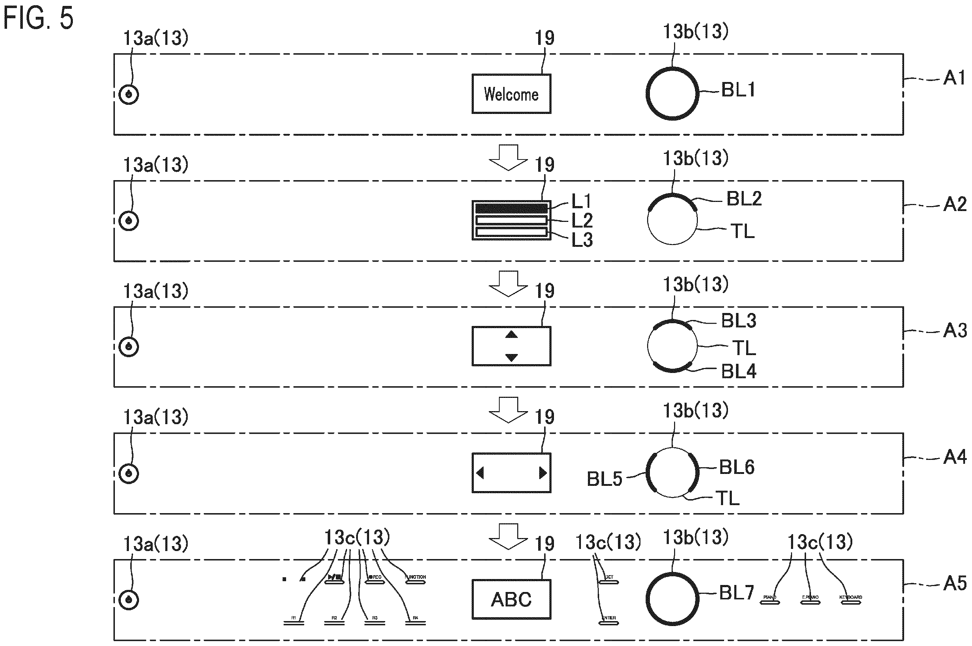

FIG. 5 illustrates information of the first pattern that is to be output by the LED 15 and the LCD 19 driven in the first pattern. The information of the first pattern is output in the order of signs A1 to A5 in FIG. 5. Here, information to be output to the operation element 13b and the LCD 19 will be mainly described. Note that, on the back side of the top board on which the switch panel 13 is formed, a plurality of LEDs 15 is circumferentially arranged in such a manner as to correspond to the operation element 13b. In accordance with light-emitting states of the plurality of circumferentially-arranged LEDs 15, the entire circumference of the operation element 13b emits light (i.e., the operation element 13b emits light in a ring shape), or the operation element 13b emits light by a partial angular range. Hereinafter, for the sake of explanatory convenience, in the operation element 13b having a ring-shaped light emission range, a light emission portion that emits light using the LEDs 15 is indicated by a sign BL, and a non-light emission portion that does not emit light using the LEDs 15 (i.e., portion in which the LEDs 15 are turned off) is indicated by a sign TL. Further, in FIG. 5, for the sake of convenience of making a light emission portion and a non-light emission portion easily-distinguishable, the light emission portion is indicated by a bold line, and the non-light emission portion is indicated by a fine line.

As indicated by the sign A1 as an initial state, a message "Welcome" is displayed on the LCD 19, and the operation element 13b emits light in a ring shape using the LEDs 15. In other words, as indicated by a bold line assigned a sign BL1, the entire circumference of the operation element 13b emits light.

As indicated by the sign A2 as a second state, three rectangles L1 to L3 are displayed on the LCD 19, and as indicated by a bold line assigned a sign BL2, the operation element 13b emits light only by a partial angular range (an upper circumferential portion of the operation element 13b). More specifically, the rectangle L1 is displayed on the LCD 19 in color different from the color of the rectangles L2 and L3, and the color of rectangle L1 sequentially shifts to the rectangles L2 and L3 as time passes. When the color of the rectangle L2 changes to the color of the rectangle L1, the color of the rectangle L1 changes to the color of the rectangle L3. The same applies to the time when the color of the rectangle L3 changes to the same color as the color of the rectangle L2. In other words, any one rectangle of the rectangles L1 to L3 is displayed in color different from the color of other rectangles. Along with this, a light emission portion of the operation element 13b (portion indicated by a bold line assigned the sign BL2) gradually shifts in a predetermined rotational direction as time passes in such a manner that the light emission portion looks like rotating.

A light emission pattern of the operation element 13b in which the light emission portion of the operation element 13b looks like rotating as described above is a pattern representing a rotation operation on the operation element 13b that is performed by the user, in a simulating manner. Further, a moving image in which the colors of the rectangles L1 to L3 sequentially shift as described above is a moving image representing, in a simulating manner, that a selected item of a screen that is displayed on the LCD 19 moves in accordance with a rotation operation on the operation element 13b that is performed by the user.

In this manner, in the second state indicated by the sign A2, it is represented that a selected item of a screen that is displayed on the LCD 19 moves in accordance with a rotation operation on the operation element 13b that is performed by the user. Note that a moving image includes still images consecutively displayed in accordance with a frame rate. In another embodiment, still images (as an exemplification, still images representing, in a simulating manner, that a selected item of a screen that is displayed on the LCD 19 moves in accordance with a rotation operation on the operation element 13b that is performed by the user) may be displayed on the LCD 19 in place of the moving image.

That is, the LCD 19 serving as an example of a display unit displays, as an image (still image or moving image) related to an operation element, an image corresponding to an operation on the operation element (in the above example, a moving image representing, in a simulating manner, that a selected item of a screen that is displayed on the LCD 19 moves in accordance with a rotation operation on the operation element 13b that is performed by the user). Further, the LED 15 serving as an example of a light emission unit causes the operation element 13b to emit light, in accordance with display content of an image displayed on the LCD 19.

As indicated by the sign A3 as a third state, an upper portion (refer to a bold line assigned a sign BL3) and a lower portion (refer to a bold line assigned a sign BL4) of the operation element 13b emit light, and an up-pointing arrow and a down-pointing arrow are respectively displayed in an upper portion and a lower portion of the LCD 19.

A light emission pattern in which only the upper portion and the lower portion of the operation element 13b are caused to emit light is a pattern representing, in a simulating manner, an operation of the user touching the upper portion and the lower portion of the operation element 13b. The up-pointing arrow and the down-pointing arrow displayed on the LCD 19 are images representing, in a simulating manner, the switching of a screen displayed on the LCD 19, or the movement of a selected item, for example.

In this manner, in the third state indicated by the sign A3, it is represented that a screen displayed on the LCD 19 switches and a selected item moves, for example, in accordance with touch operations on the upper portion and the lower portion of the operation element 13b that are performed by the user.

As indicated by the sign A4 as a fourth state, a left portion (refer to a bold line assigned a sign BL5) and a right portion (refer to a bold line assigned a sign BL6) of the operation element 13b emit light, and a left-pointing arrow and a right-pointing arrow are respectively displayed in a left portion and a right portion of the LCD 19.

A light emission pattern in which only the left portion and the right portion of the operation element 13b are caused to emit light is a pattern representing, in a simulating manner, an operation of the user touching the left portion and the right portion of the operation element 13b. The left-pointing arrow and the right-pointing arrow displayed on the LCD 19 are images representing, in a simulating manner, the switching of a screen displayed on the LCD 19, or the movement of a selected item, for example.

In this manner, in the fourth state indicated by the sign A4, it is represented that a screen displayed on the LCD 19 switches and a selected item moves, for example, in accordance with touch operations on the left portion and the right portion of the operation element 13b that are performed by the user.

As indicated by the sign A5 as a fifth state, a logo is displayed on the LCD 19 as last information of the first pattern, and all operation elements (13a, 13b, 13c) emit light.

A series of information pieces indicated by the signs A1 to A5 are information pieces to be reproduced over the constant time. Thus, in the present embodiment, if the processor 10 starts first boot processing, the output of information of the first pattern is simultaneously started, and if the processor 10 completes the first boot processing, the output of information of the first pattern is simultaneously ended.

In this manner, the processor 10 operates as the output control unit 100c that causes the output unit to output information of the first pattern during the first boot processing. More specifically, by transmitting the control signal S1 to the output unit (Step S102), the processor 10 operating as the output control unit 100c causes the output unit to output information of the first pattern in such a manner that the output of information of the first pattern ends when the first boot processing taking a constant time is completed. A user who views the information of the first pattern can imagine an operation image of the operation element 13b. The above-described output processing that is based on the control signal S1 can also be represented as "first output processing of outputting information of the first pattern to the output unit during the first boot processing". That is, it can also be said that the processor 10 executes the first output processing in such a manner that the output of information of the first pattern ends when the first boot processing taking a constant time is completed. Further, it can also be said that the processor 10 displays an image related to an operation element, on the LCD 19, and causes the operation element to emit light using the LEDs 15 in a light emission pattern corresponding to the displayed image, in the first output processing executed during the execution of the first boot processing.

In the present embodiment, the boot processing is not completed only by the first boot processing of bringing the electronic musical instrument 1 into a playable state. If the first boot processing is completed, the processor 10 executes the second boot processing using the second boot unit 100b (Step S104).

The second boot processing includes optimization processing of the flash ROM 12, for example. In the second boot processing, a boot time taken from the start to completion varies in accordance with a usage state of data in a data region of the flash ROM 12.

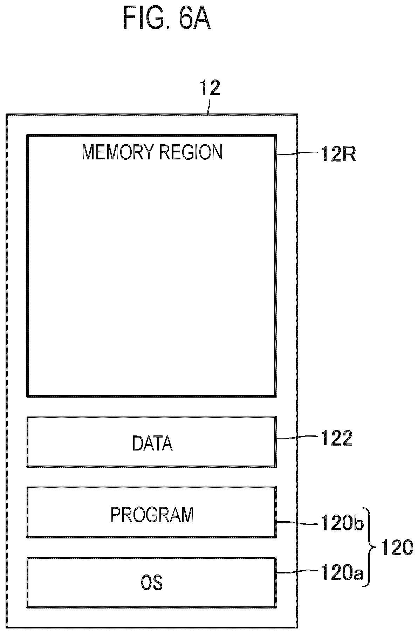

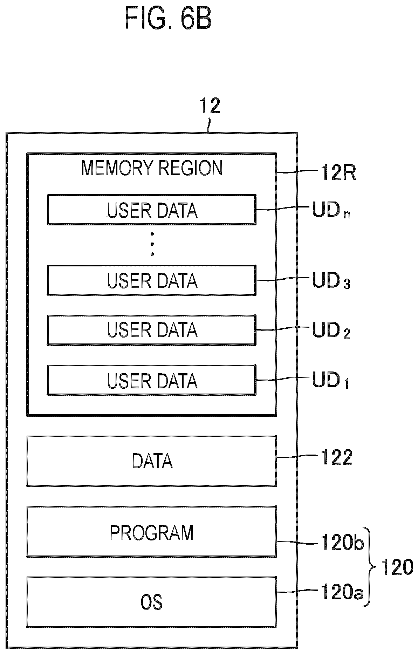

FIG. 6A illustrates a state of the flash ROM 12 of the electronic musical instrument 1 that is obtained before shipment. FIG. 6B illustrates a state of the flash ROM 12 of the electronic musical instrument 1 used by a user. As illustrated in FIGS. 6A and 6B, the control program 120 and data 122 are stored in the flash ROM 12.

The control program 120 includes an Operating System (OS)120a and a program 120b. The program 120b is software in a higher-level layer than the OS 120a, and includes various programs operating on the OS 120a.

The data 122 includes various types of data prepared by default that are to be referred to by the program 120b, for example.

The flash ROM 12 includes a memory region 12R. The memory region 12R is a region preliminarily ensured for user data UD.

In this manner, the flash ROM 12 operates as a storage unit including the memory region 12R serving as an example of a data region that stores data.

The user data UD to be stored in the memory region 12R is data to be acquired in accordance with an operation performed by the user. Examples of the user data UD include recording data, music data, and registration data. The recording data is performance data of the user that has been recorded using a recorder function of the electronic musical instrument 1, for example. The music data is music data acquired from an external device connected to the serial interface 21, for example. The registration data is preference data of tone color or the like, for example.

The processor 10 manages the user data UD using a file system, for example. The processor 10 accesses an address in the flash ROM 12 that is indicated by a pointer, and refers to the user data UD stored in the accessed address.

In accordance with a use status of the electronic musical instrument 1 used by the user, various types of user data UD are sequentially stored into the flash ROM 12. As an example, as illustrated in FIG. 6B, pieces of user data UD₁ to UDₙ are stored into the flash ROM 12.

For example, if an operation of issuing an erasing instruction of the user data UD₂ is performed, the processor 10 erases a pointer indicating an address storing the user data UD₂. On the other hand, the processor 10 does not erase actual data of the user data UD₂. Thus, each time new user data UD is written into the memory region 12R, a free space of the memory region 12R becomes smaller. For example, if a free space of the memory region 12R becomes smaller than a certain capacity, to ensure a free space, the processor 10 erases actual data of the user data UD that is stored in an address indicated by the erased pointer.

If writing and erasing of actual data of the user data UD are repeated, the number of small free spaces increases in the memory region 12R in a discontinuous manner. In a state in which free spaces are not organized in this manner, new user data UD needs to be written into a plurality of small free spaces in a discontinuous manner. To avoid this, in the present embodiment, optimization processing of the flash ROM 12 (more specifically, memory region 12R) is performed during the second boot processing.

In the optimization processing, the processor 10 executes garbage collection, for example. The garbage collection is one of functions included in an execution environment of a computer program or the like. In the garbage collection, among memory regions occupied by an ongoing program, a memory region that has become unnecessary is automatically released, and made reusable as a free space. The garbage collection will be specifically described. The processor 10 determines whether or not an object in a heap region is necessary in the execution of garbage collection, and a memory region of an unnecessary object is released. Here, the heap region is a memory region that can be used by a certain program, and the heap region is divided into three regions called Young, Old, and Permanent, for example. Although allocation to memories basically occur frequently, most of the memories do not last long. Based on such an idea, newly-generated data is stored into the Young region, and data to be referred to for a long time is stored into the Old region. Further, data guaranteed to be not variable to some extent, such as information regarding a loaded class, is stored into the Permanent region. Then, the processor 10 appropriately executes, in accordance with a recording status of the memory region 12R, processing of using only data included in the Young region as minor garbage collection, as a target of garbage collection, or processing of using data included in the Young region and the Old region as full garbage collection, as a target of garbage collection. A time required by the processing of the minor garbage collection becomes a relatively shorter as compared with a time required by the processing of the full garbage collection. The processor 10 completes optimization processing by executing the garbage collection, for example. Further, the processor 10 may execute defragmentation as optimization processing.

The optimization processing exemplified above tends to take a longer time from the start to completion as a memory usage amount (specifically, a region of memory region 12R that is occupied by the user data UD) becomes larger. Note that the "memory usage amount" may be read as a "memory usage rate", for example. Because a boot time of the electronic musical instrument 1 is prolonged as the optimization processing takes a longer time, stress can be given to the user.

Thus, if the output of information of the first pattern ends (in other words, at a timing at which the execution of second boot processing is started after the completion of first boot processing), the LED driver 16 and the LCD controller 20 included in the output unit drive the LED 15 and the LCD 19 in the second pattern (Step S202).

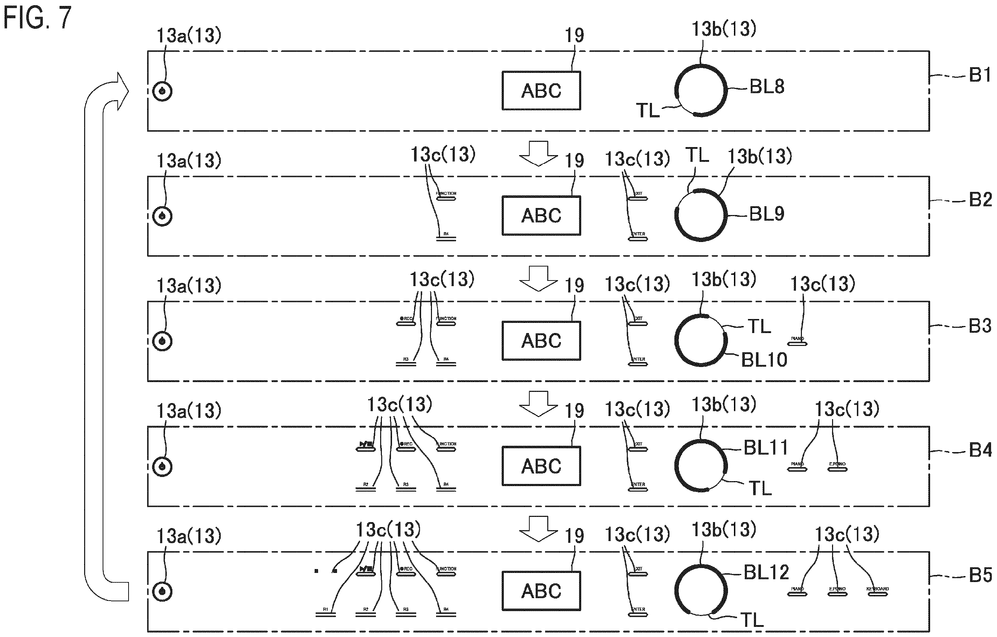

FIG. 7 illustrates information of the second pattern that is to be output by the LED 15 and the LCD 19 driven in the second pattern. The information of the second pattern is repeatedly output in the order of signs B1 to B5 in FIG. 7. Similarly to FIG. 5, also in FIG. 7, a light emission portion and a non-light emission portion of the operation element 13b are assigned signs, and the light emission portion is indicated by a bold line, and the non-light emission portion is indicated by a fine line.

As indicated by the sign B1 as an initial state, a logo is displayed on the LCD 19, and the LEDs 15 corresponding to the operation element 13b emit light. Specifically, the operation element 13b emits light in a state in which partial LEDs 15 among LEDs 15 on the circumference of the operation element 13b are turned off (refer to a bold line assigned a sign BL8). Subsequently, as indicated by signs B2 to B5, operation elements emit light in the order from the operation element 13c arranged at a position closer to the LCD 19, toward the operation elements 13c arranged in directions heading for the ends (refer to FIG. 1) in a left-right direction of the switch panel 13. Further, as indicated by the signs B1 to B5, the logo displayed on the LCD 19 during the second boot processing is a still image.

In this manner, during the second boot processing, the LEDs 15 corresponding to the operation elements 13c emit light in a predetermined order, and the light emission processing is repeated until the second boot processing is completed. Further, during the second boot processing, as illustrated in the diagrams of the sign B1 to B5 (refer to bold lines assigned signs BL8 to BL12), by changing a light emission portion of the operation element 13b little by little, a rotation operation on the operation element 13b that is performed by the user is represented in a simulated manner. This can give an image in which the operation element 13b is rotationally operated by the user.

If the optimization processing of the flash ROM 12 is completed (Step S105: YES), the processor 10 cancels the mute (refer to Step S303 in FIG. 4), and transitions to a waiting state (Step S107), and transmits, to the output unit, a control signal S2 for issuing an output stop instruction of information of the second pattern (Step S106).

The information of the second pattern indicated by the signs B1 to B5 in FIG. 7 is repeatedly output until the second boot processing is completed. If the LED driver 16 and the LCD controller 20 included in the output unit receive the control signal S2 (Step S106), the LED driver 16 and the LCD controller 20 stop the driving in the second pattern, and drive the LED 15 and the LCD 19 in a waiting mode (Step S203). In the waiting mode, for example, a predetermined menu screen is displayed on the LCD 19, and all the operation elements (13a, 13b, 13c) emit light.

As indicated by the signs B1 to B5 in FIG. 7, during the second boot processing, the operation elements 13c are caused to sequentially emit light, and a still image is further display on the LCD 19. Thus, even in a case where the output of information of the second pattern is suddenly stopped when the second boot processing is completed, an uncomfortable feeling is less likely to be given to the user.

In this manner, between the first boot processing and the second boot processing, a light emission pattern of the LEDs 15 serving as an example of a light emission unit varies. Specifically, the processor 10 causes the output unit to output information of the second pattern during the second boot processing. More specifically, when the execution of the first boot processing is started, by transmitting, to the output unit, the control signal S1 for issuing an output instruction of information of the first pattern (Step S102), the processor 10 causes the output unit to output information of the first pattern (and causes the output unit to output information of the second pattern after the lapse of the constant time), starts the execution of the second boot processing subsequently to the completion of the first boot processing, and if the second boot processing is completed, by transmitting the control signal S2 (Step S106) indicating the completion of the second boot processing, to the output unit, output of information of the second pattern that is performed by the output unit is ended. The above-described output processing that is based on the control signals S1 and S2 can also be represented as "second output processing of outputting information of the second pattern to the output unit until the second boot processing is completed". In the present embodiment, the processor 10 causes the LEDs 15 corresponding to a plurality of operation elements 13c, to emit light in a predetermined order in the second output processing executed during the execution of the second boot processing.

Note that a case where the user data UD is not stored in the memory region 12R will be considered (refer to FIG. 6A). In this case, immediately after the completion of the first boot processing, completion of optimization processing is determined. Thus, immediately after the completion of the first boot processing, the control signal S2 (Step S106) is transmitted to the output unit. Thus, the output unit receives the control signal S2 immediately after the output of information of the first pattern ends. Thus, information of the second pattern is not output from the output unit. In other words, in a case where the user data UD is not stored in the memory region 12R, the processor 10 does not cause information of the second pattern to be output from the output unit.

In this manner, a time taken to execute the second boot processing varies between a case where the memory region 12R is in a first state (for example, a factory default state illustrated in FIG. 6A), and a case where the memory region 12R is in a second state different from the first state (for example, state requiring optimization processing). In accordance with the time taken to execute the second boot processing, a time during which the output unit outputs information of the second pattern also varies.

According to the above-described embodiment, the electronic musical instrument 1 can reduce stress on a user who waits for the completion of boot processing.

Moreover, the present invention is not limited to the above-described embodiment, and in an implementation phase, various modifications can be made without departing from the gist thereof. Further, functions to be executed in the above-described embodiment may be appropriately executed in combination as far as possible. The above-described embodiment includes various phases, and various inventions can be extracted based on an appropriate combination of a plurality of components to be disclosed. For example, if several components are deleted from among all components described in the embodiment, as long as an effect can be obtained, the configuration from which the components are deleted can be extracted as an invention.

In the above-described embodiment, the configuration of causing the output unit to output visual information (image and light) has been described, but in another embodiment, a configuration of causing the output unit to output audio information in place of or in addition to visual information may be employed. As an example, a phrase of a certain musical piece is output from the speaker 26 during the first boot processing. Subsequently, during a period until the second boot processing is completed since the first boot processing is completed, a small clause of the certain musical piece that is shorter than the above-described phrase is repeatedly output from the speaker 26.

By such audio information output being performed, it is possible to make a user less likely to be conscious of a wait time during boot processing. Also in this case, it is possible to reduce stress on the user who waits for the electronic musical instrument 1 to enter a playable state.

## Claims

1. An electronic device (1) comprising:
a storage unit (12) including a data region (12R) that stores data (UD) to be acquired in accordance with an operation of the electronic device (1) performed by a user;
an output unit (15, 19); and
at least one processor (10), wherein
the at least one processor (10) executes:
first boot processing which is performed at a predetermined boot time irrespective of a usage state of data in the data region,
first output processing of outputting information of a first pattern to the output unit (15, 19) during execution of the first boot processing,
second boot processing in which a boot time varies depending on a usage state of the data, and
second output processing of outputting information of a second pattern to the output unit (15, 19) until the second boot processing is completed,
wherein, in a case where the data (UD) is not stored in the data region (12R), the at least one processor (10) does not cause the information of the second pattern to be output from the output unit (15, 19).

2. The electronic device (1) according to claim 1, wherein
a boot time taken to execute the second boot processing varies between a case where a state of the data region is a first state, and a case where a state of the data region is a second state different from the first state.

3. The electronic device (1) according to claim 1, wherein
if the first boot processing is completed, then the at least one processor (10) executes the second boot processing.

4. The electronic device (1) according to claim 1, wherein
the at least one processor (10) executes the first output processing in such a manner that output of information of the first pattern ends when the first boot processing taking a constant time is completed.

5. The electronic device (1) according to claim 1, wherein
the at least one processor (10) repeatedly outputs the information of the second pattern to the output unit (15, 19) until the second boot processing is completed in the second output processing.

6. The electronic device (1) according to claim 1, wherein
the first boot processing includes processing for bringing the electronic device (1) into a state of being able to output sound corresponding to a play operation performed on the electronic device (1).

7. The electronic device (1) according to claim 1, wherein
data to be acquired in accordance with an operation performed by a user is stored in the data region.

8. The electronic device (1) according to claim 1, wherein
the second boot processing includes optimization processing of the data region.

9. The electronic device (1) according to claim 1, wherein
the information includes at least either one of visual information and audio information.

10. The electronic device (1) according to claim 1, wherein
the output unit (15,19) includes a light emission unit (15), and
a light emission pattern of the light emission unit (15) varies between the first boot processing and the second boot processing.

11. The electronic device (1) according to claim 10, comprising an operation element (13), wherein
the output unit (15, 19) further includes a display unit (19), and
the at least one processor (10) displays an image related to the operation element (13), on the display unit (19), and causes the operation element (13) to emit light using the light emission unit (15) in a light emission pattern corresponding to the image, in the first output processing executed during execution of the first boot processing.

12. The electronic device (1) according to claim 11, wherein
an image related to the operation element (13) is an image corresponding to an operation on the operation element (13), and
the at least one processor (10) causes the light emission unit (15) to emit light in accordance with display content of the image displayed on the display unit (19).

13. The electronic device (1) according to claim 11, wherein
a plurality of the light emission units (15) is included,
a plurality of the operation elements (13) is included, and
the at least one processor (10) causes light emission units (15) corresponding to the plurality of operation elements (13), to emit light in a predetermined order in the second output processing executed during execution of the second boot processing.

14. The electronic device (1) according to any one of claims 1 to 13, wherein
the electronic device (1) is an electronic musical instrument including a plurality of keys (17).

15. A method for causing a computer including a storage unit (12) including a data region (12R) that stores data (UD) to be acquired in accordance with an operation of the electronic device (1) performed by a user, and an output unit (15, 19), to execute:
first boot processing which is performed at a predetermined boot time irrespective of a usage state of data in the data region;
first output processing of outputting information of a first pattern to the output unit during execution of the first boot processing;
second boot processing in which a boot time varies depending on a usage state of the data; and
second output processing of outputting information of a second pattern to the output unit until the second boot processing is completed,
wherein, in a case where the data (UD) is not stored in the data region (12R), not outputting the information of the second pattern from the output unit (15, 19).

16. A recording medium recording a readable program that causes a computer including a storage unit (12) including a data region (12R) that stores data (UD) to be acquired in accordance with an operation of the electronic device (1) performed by a user, and an output unit (15, 19), to execute:
first boot processing which is performed at a predetermined boot time irrespective of a usage state of data in the data region;
first output processing of outputting information of a first pattern to the output unit (15, 19) during execution of the first boot processing;
second boot processing in which a boot time varies depending on a usage state of the data; and
second output processing of outputting information of a second pattern to the output unit (15, 19) until the second boot processing is completed,
wherein, in a case where the data (UD) is not stored in the data region (12R), not outputting the information of the second pattern from the output unit (15, 19).

## Patentansprüche

1. Elektronische Vorrichtung (1), die Folgendes umfasst:
eine Speichereinheit (12), die einen Datenbereich (12R) einschließt, der Daten (UD) speichert, die in Übereinstimmung mit einem durch einen Benutzer durchgeführten Vorgang der elektronischen Vorrichtung (1) zu erfassen sind;
eine Ausgabeeinheit (15, 19); und
mindestens einen Prozessor (10), wobei
der mindestens eine Prozessor (10) Folgendes ausführt:
eine erste Boot-Verarbeitung, die zu einer vorbestimmten Boot-Zeit unabhängig von einem Nutzungszustand von Daten in dem Datenbereich durchgeführt wird,
eine erste Ausgabeverarbeitung eines Ausgebens von Informationen eines ersten Musters an die Ausgabeeinheit (15, 19) während einer Ausführung der ersten Boot-Verarbeitung,
eine zweite Boot-Verarbeitung, bei der eine Boot-Zeit in Abhängigkeit von einem Nutzungszustand der Daten variiert, und
eine zweite Ausgabeverarbeitung eines Ausgebens von Informationen eines zweiten Musters an die Ausgabeeinheit (15, 19), bis die zweite Boot-Verarbeitung abgeschlossen ist,
wobei in einem Fall, in dem die Daten (UD) nicht in dem Datenbereich (12R) gespeichert sind, der mindestens eine Prozessor (10) nicht veranlasst, dass die Informationen des zweiten Musters von der Ausgabeeinheit (15, 19) ausgegeben werden.

2. Elektronische Vorrichtung (1) nach Anspruch 1, wobei
eine zum Ausführen der zweiten Boot-Verarbeitung benötigte Boot-Zeit zwischen einem Fall, in dem ein Zustand des Datenbereichs ein erster Zustand ist, und einem Fall, in dem ein Zustand des Datenbereichs ein zweiter Zustand ist, der sich von dem ersten Zustand unterscheidet, variiert.

3. Elektronische Vorrichtung (1) nach Anspruch 1, wobei,
falls die erste Boot-Verarbeitung abgeschlossen ist, der mindestens eine Prozessor (10) dann die zweite Boot-Verarbeitung ausführt.

4. Elektronische Vorrichtung (1) nach Anspruch 1, wobei
der mindestens eine Prozessor (10) die erste Ausgabeverarbeitung auf eine solche Weise ausführt, dass eine Ausgabe von Informationen des ersten Musters endet, wenn die erste Boot-Verarbeitung, die eine konstante Zeit benötigt, abgeschlossen ist.

5. Elektronische Vorrichtung (1) nach Anspruch 1, wobei
der mindestens eine Prozessor (10) wiederholt die Informationen des zweiten Musters an die Ausgabeeinheit (15, 19) ausgibt, bis die zweite Boot-Verarbeitung in der zweiten Ausgabeverarbeitung abgeschlossen ist.

6. Elektronische Vorrichtung (1) nach Anspruch 1, wobei
die erste Boot-Verarbeitung eine Verarbeitung einschließt, um die elektronische Vorrichtung (1) in einen Zustand zu bringen, in dem sie in der Lage ist, einen Ton auszugeben, der einem auf der elektronischen Vorrichtung (1) durchgeführten Abspielvorgang entspricht.

7. Elektronische Vorrichtung (1) nach Anspruch 1, wobei
Daten, die in Übereinstimmung mit einem durch einen Benutzer durchgeführten Vorgang zu erfassen sind, in dem Datenbereich gespeichert sind.

8. Elektronische Vorrichtung (1) nach Anspruch 1, wobei
die zweite Boot-Verarbeitung eine Optimierungsverarbeitung des Datenbereichs einschließt.

9. Elektronische Vorrichtung (1) nach Anspruch 1, wobei
die Informationen mindestens eines von visuellen Informationen und Audioinformationen einschließen.

10. Elektronische Vorrichtung (1) nach Anspruch 1, wobei
die Ausgabeeinheit (15, 19) eine Lichtemissionseinheit (15) einschließt und
ein Lichtemissionsmuster der Lichtemissionseinheit (15) zwischen der ersten Boot-Verarbeitung und der zweiten Boot-Verarbeitung variiert.

11. Elektronische Vorrichtung (1) nach Anspruch 10, umfassend ein Vorgangselement (13), wobei
die Ausgabeeinheit (15, 19) weiter eine Anzeigeeinheit (19) einschließt und
der mindestens eine Prozessor (10) ein Bild, das sich auf das Vorgangselement (13) bezieht, auf der Anzeigeeinheit (19) anzeigt und das Vorgangselement (13) veranlasst, Licht unter Verwendung der Lichtemissionseinheit (15) in einem Lichtemissionsmuster, das dem Bild entspricht, in der ersten Ausgabeverarbeitung, die während einer Ausführung der ersten Boot-Verarbeitung ausgeführt wird, zu emittieren.

12. Elektronische Vorrichtung (1) nach Anspruch 11, wobei
ein Bild, das sich auf das Vorgangselement (13) bezieht, ein Bild ist, das einem Vorgang an dem Vorgangselement (13) entspricht, und
der mindestens eine Prozessor (10) die Lichtemissionseinheit (15) veranlasst, Licht in Übereinstimmung mit einem Anzeigeinhalt des auf der Anzeigeeinheit (19) angezeigten Bilds zu emittieren.

13. Elektronische Vorrichtung (1) nach Anspruch 11, wobei
eine Vielzahl von Lichtemissionseinheiten (15) eingeschlossen ist,
eine Vielzahl von Vorgangselementen (13) eingeschlossen ist und
der mindestens eine Prozessor (10) veranlasst, dass Lichtemissionseinheiten (15), die der Vielzahl von Vorgangselementen (13) entsprechen, in der zweiten Ausgabeverarbeitung, die während einer Ausführung der zweiten Boot-Verarbeitung ausgeführt wird, Licht in einer vorbestimmten Reihenfolge emittieren.

14. Elektronische Vorrichtung (1) nach einem der Ansprüche 1 bis 13, wobei
die elektronische Vorrichtung (1) ein elektronisches Musikinstrument ist, das eine Vielzahl von Tasten (17) einschließt.

15. Verfahren zum Veranlassen, dass ein Computer, der eine Speichereinheit (12), die einen Datenbereich (12R) einschließt, der Daten (UD) speichert, die in Übereinstimmung mit einem durch einen Benutzer durchgeführten Vorgang der elektronischen Vorrichtung (1) zu erfassen sind, und eine Ausgabeeinheit (15, 19) einschließt, Folgendes ausführt:
eine erste Boot-Verarbeitung, die zu einer vorbestimmten Boot-Zeit unabhängig von einem Nutzungszustand von Daten in dem Datenbereich durchgeführt wird;
eine erste Ausgabeverarbeitung eines Ausgebens von Informationen eines ersten Musters an die Ausgabeeinheit während einer Ausführung der ersten Boot-Verarbeitung;
eine zweite Boot-Verarbeitung, bei der eine Boot-Zeit in Abhängigkeit von einem Nutzungszustand der Daten variiert; und
eine zweite Ausgabeverarbeitung eines Ausgebens von Informationen eines zweiten Musters an die Ausgabeeinheit, bis die zweite Boot-Verarbeitung abgeschlossen ist,
wobei in einem Fall, in dem die Daten (UD) nicht in dem Datenbereich (12R) gespeichert sind, kein Ausgeben der Informationen des zweiten Musters von der Ausgabeeinheit (15, 19) erfolgt.

16. Aufzeichnungsmedium, das ein lesbares Programm aufzeichnet, das einen Computer, der eine Speichereinheit (12), die einen Datenbereich (12R) einschließt, der Daten (UD) speichert, die in Übereinstimmung mit einem durch einen Benutzer durchgeführten Vorgang der elektronischen Vorrichtung (1) zu erfassen sind, und eine Ausgabeeinheit (15, 19) einschließt, dazu veranlasst, Folgendes auszuführen:
eine erste Boot-Verarbeitung, die zu einer vorbestimmten Boot-Zeit unabhängig von einem Nutzungszustand von Daten in dem Datenbereich durchgeführt wird;
eine erste Ausgabeverarbeitung eines Ausgebens von Informationen eines ersten Musters an die Ausgabeeinheit (15, 19) während einer Ausführung der ersten Boot-Verarbeitung;
eine zweite Boot-Verarbeitung, bei der eine Boot-Zeit in Abhängigkeit von einem Nutzungszustand der Daten variiert; und
eine zweite Ausgabeverarbeitung eines Ausgebens von Informationen eines zweiten Musters an die Ausgabeeinheit (15, 19), bis die zweite Boot-Verarbeitung abgeschlossen ist,
wobei in einem Fall, in dem die Daten (UD) nicht in dem Datenbereich (12R) gespeichert sind, kein Ausgeben der Informationen des zweiten Musters von der Ausgabeeinheit (15, 19) erfolgt.

## Revendications

1. Dispositif électronique (1) comprenant :
une unité de mémorisation (12) incluant une zone de données (12R) qui mémorise des données (UD) devant être acquises conformément à une opération effectuée par un utilisateur sur le dispositif électronique (1) ;
une unité de sortie (15, 19) ; et
au moins un processeur (10),
ledit au moins un processeur (10) exécutant :
un premier traitement d'amorçage qui est effectué à un temps d'amorçage préétabli, indépendamment d'un état d'utilisation de données dans la zone de données,
un premier traitement de sortie consistant à fournir des informations d'un premier motif à l'unité de sortie (15, 19) pendant l'exécution du premier traitement d'amorçage,
un second traitement d'amorçage dans lequel un temps d'amorçage varie en fonction d'un état d'utilisation des données, et
un second traitement de sortie consistant à fournir des informations d'un second motif à l'unité de sortie (15, 19) jusqu'à ce que le second traitement d'amorçage soit achevé,
où, dans un cas où les données (UD) ne sont pas mémorisées dans la zone de données (12R), ledit au moins un processeur (10) n'amène pas les informations du second motif à être fournies depuis l'unité de sortie (15, 19).

2. Dispositif électronique (1) selon la revendication 1, dans lequel
un temps d'amorçage pris pour exécuter le second traitement d'amorçage varie entre un cas où un état de la zone de données est un premier état, et un cas où un état de la zone de données est un second état différent du premier état.

3. Dispositif électronique (1) selon la revendication 1, dans lequel
si le premier first traitement d'amorçage est achevé, ledit au moins un processeur (10) exécute alors le second traitement d'amorçage.

4. Dispositif électronique (1) selon la revendication 1, dans lequel
ledit au moins un processeur (10) exécute le premier traitement de sortie de telle façon que la sortie des informations du premier motif se termine lorsque le premier traitement d'amorçage prenant un temps constant est achevé.

5. Dispositif électronique (1) selon la revendication 1, dans lequel
ledit au moins un processeur (10) fournit de façon répétée les informations du second motif à l'unité de sortie (15, 19) jusqu'à ce que le second traitement d'amorçage soit achevé dans le second traitement de sortie.

6. Dispositif électronique (1) selon la revendication 1, dans lequel
le premier traitement d'amorçage inclut un traitement destiné à mettre le dispositif électronique (1) dans un état d'aptitude à émettre un son correspondant à une opération de jeu effectuée sur le dispositif électronique (1).

7. Dispositif électronique (1) selon la revendication 1, dans lequel
des données devant être acquises conformément à une opération effectuée par un utilisateur sont mémorisées dans la zone de données.

8. Dispositif électronique (1) selon la revendication 1, dans lequel
le second traitement d'amorçage inclut un traitement d'optimisation de la zone de données.

9. Dispositif électronique (1) selon la revendication 1, dans lequel
les informations incluent au moins les unes ou les autres d'informations visuelles et d'informations auditives.

10. Dispositif électronique (1) selon la revendication 1, dans lequel
l'unité de sortie (15,19) inclut une unité d'émission (15) de lumière, et
un motif d'émission de lumière de l'unité d'émission (15) de lumière varie entre le premier traitement d'amorçage et le second traitement d'amorçage.

11. Dispositif électronique (1) selon la revendication 10, comprenant un élément d'opération (13), dans lequel
l'unité de sortie (15, 19) inclut en outre une unité d'affichage (19), et
ledit au moins un processeur (10) affiche sur l'unité d'affichage (19) une image relative à l'élément d'opération (13), et amène l'élément d'opération (13) à émettre de la lumière en utilisant l'unité d'émission (15) en un motif d'émission de lumière correspondant à l'image, dans le premier traitement de sortie exécuté pendant l'exécution du premier traitement d'amorçage.

12. Dispositif électronique (1) selon la revendication 11, dans lequel
une image relative à l'élément d'opération (13) est une image correspondant à une opération sur l'élément d'opération (13), et
ledit au moins un processeur (10) amène l'unité d'émission (15) de lumière à émettre de la lumière conformément au contenu d'affichage de l'image affichée sur l'unité d'affichage (19).

13. Dispositif électronique (1) selon la revendication 11, dans lequel
une pluralité des unités d'émission (15) de lumière est incluse,
une pluralité des éléments d'opération (13) est incluse, et
ledit au moins un processeur (10) amène les unités d'émission (15) de lumière, correspondant à la pluralité d'éléments d'opération (13), à émettre de la lumière dans un ordre préétabli, dans le second traitement de sortie exécuté pendant l'exécution du second traitement d'amorçage.

14. Dispositif électronique (1) selon l'une quelconque des revendications 1 à 13, dans lequel
le dispositif électronique (1) est un instrument musical électronique incluant une pluralité de touches (17).

15. Procédé pour amener un ordinateur incluant une unité de mémorisation (12) incluant une zone de données (12R) qui mémorise des données (UD) devant être acquises conformément à une opération effectuée par un utilisateur sur le dispositif électronique (1), et une unité de sortie (15, 19), à exécuter :
un premier traitement d'amorçage qui est effectué à un temps d'amorçage préétabli, indépendamment d'un état d'utilisation de données dans la zone de données ;
un premier traitement de sortie consistant à fournir des informations d'un premier motif à l'unité de sortie (15, 19) pendant l'exécution du premier traitement d'amorçage ,
un second traitement d'amorçage dans lequel un temps d'amorçage varie en fonction d'un état d'utilisation des données ; et
un second traitement de sortie consistant à fournir des informations d'un second motif à l'unité de sortie jusqu'à ce que le second traitement d'amorçage soit achevé,
où, dans un cas où les données (UD) ne sont pas mémorisées dans la zone de données (12R), ne pas fournir les informations du second motif depuis l'unité de sortie (15, 19).

16. Support d'enregistrement enregistrant un programme lisible qui amène un ordinateur incluant une unité de mémorisation (12) incluant une zone de données (12R) qui mémorise des données (UD) devant être acquises conformément à une opération effectuée par un utilisateur sur le dispositif électronique (1), et une unité de sortie (15, 19), à exécuter :
un premier traitement d'amorçage qui est effectué à un temps d'amorçage préétabli, indépendamment d'un état d'utilisation de données dans la zone de données ;
un premier traitement de sortie consistant à fournir des informations d'un premier motif à l'unité de sortie pendant l'exécution du premier traitement d'amorçage ,
un second traitement d'amorçage dans lequel un temps d'amorçage varie en fonction d'un état d'utilisation des données ; et
un second traitement de sortie consistant à fournir des informations d'un second motif à l'unité de sortie (15, 19) jusqu'à ce que le second traitement d'amorçage soit achevé,
où, dans un cas où les données (UD) ne sont pas mémorisées dans la zone de données (12R), ne pas fournir les informations du second motif depuis l'unité de sortie (15, 19).
